# FASCICULE DE BREVET EUROPEEN

(11) **EP 4 526 188 B1**
(45) Date de publication et mention de la délivrance du brevet: **11.03.2026**
(21) Numéro de dépôt: 23725285.3
(22) Date de dépôt: 19.04.2023
(51) Int. Cl.: B62D 25/20, B62D 35/02

(54) **VÉHICULE AUTOMOBILE COMPRENANT UNE PIÈCE DE PROTECTION DU BLOC DE BATTERIE**
KRAFTFAHRZEUG MIT EINEM TEIL ZUM SCHUTZ DES BATTERIEPACKS
MOTOR VEHICLE COMPRISING A PART FOR PROTECTING THE BATTERY PACK

(30) Priorité: 20.05.2022 FR 2204824
(43) Date de publication de la demande: 26.03.2025
(73) Titulaire: Stellantis Auto SAS, 78300 Poissy (FR)
(72) Inventeur: BERTH, Stephane, 92320 CHATILLON (FR)
(74) Mandataire: BCIP
(86) Numéro de dépôt international: PCT/FR2023/050558
(87) Numéro de publication internationale: WO 2023/222962

(56) Documents cités:
- WO-A1-2020/007651
- WO-A1-2020/169371
- DE-A1- 102014 225 019
- FR-A1- 3 093 985

## Description

La présente invention revendique la priorité de la demande française 2204824 déposée le 20 mai 2022. La présente invention concerne les véhicules automobiles comprenant une structure de soubassement sous laquelle est monté au moins un organe et un déflecteur.

Un véhicule automobile comprend généralement une structure de soubassement sous laquelle sont fixés des organes tels que des équipements. Un ou plusieurs déflecteurs formant des éléments de carénage sont aussi fixés au soubassement sous lesdits organes.

Les organes peuvent comprendre, par exemple, des canaux hydrauliques et/ou des faisceaux électriques. Dans les véhicules électriques ou hybrides électriques, une batterie de propulsion peut aussi constituer un organe fixé sous la structure de soubassement.

La batterie de propulsion fait généralement saillie sous le véhicule automobile pour ne pas réduire l'espace de l'habitacle. La batterie de propulsion est alors exposée aux chocs notamment aux chocs verticaux lors du passage d'un obstacle. Par exemple, lors d'une descente de marche ou de trottoir, la batterie est particulièrement exposée aux chocs verticaux. En effet, lors d'une descente de marche, la suspension se comprime pour amortir le véhicule, et le mouvement de descente sur les amortisseurs, réduit encore la distance entre le bac de batterie et l'obstacle.

Les déflecteurs agencés en dessous du bac de batterie forment une surface aérodynamique ou surface de carénage permettant d'améliorer la stabilité du véhicule en progression et/ou de réduire sa traînée. Les déflecteurs forment également une protection pour les organes montés sous caisse, notamment une protection contre les chocs et les projections d'eau ou de gravillons.

Cependant, le déflecteur est souvent une pièce en matière plastique pour réduire le poids total du véhicule. Il n'offre pas une protection contre les chocs importants, notamment, contre les chocs verticaux tels que ceux qui peuvent avoir lieu lors d'une descente de trottoir.

Afin d'éviter que le bac de batterie n'entre en collision avec un obstacle, on connait dans le document CN108528542B un véhicule automobile comprenant un habitacle, et une structure de soubassement, avec un bac de batterie monté en dessous de la structure de soubassement au niveau de l'habitacle. Le véhicule comprend une plaque de protection de la batterie fixée en-dessous de cette dernière. La plaque de protection comprend une partie métallique et une partie en nylon lui permettant de se déformer élastiquement lors d'un choc, pour l'amortir et de rester opérationnelle après plusieurs chocs successifs.

Cette solution est intéressante, mais la plaque de protection n'est pas suffisamment rigide pour protéger la batterie d'un choc impliquant tout le poids du véhicule comme lors d'une descente de trottoir. De plus, la plaque de protection détériore le comportement aérodynamique en modifiant l'écoulement de l'air sous le véhicule.

Le document WO 2020/007651 A1 décrit un véhicule automobile comprenant une structure de soubassement et un ensemble de batteries s'étendant sous la structure de soubassement. Le véhicule comprend en outre un déflecteur s'étendant sous la structure de soubassement, qui comprend une paroi inférieure disposée sous l'ensemble de batteries, et une butée de protection de l'ensemble de batteries fixée à la structure de soubassement. Dans le WO 2020/007651 A1, le déflecteur est disposé uniquement de part et d'autre de la batterie et la batterie est pourvue d'une couche de protection séparée. La butée de protection fait saillie entre les deux et aurait donc un effet sur l'aérodynamisme du véhicule.

Le document WO 2020/169371 A1 divulgue une butée de protection montée sur la structure de soubassement d'un véhicule, de part et d'autre d'une batterie placée sous le plancher. La butée de protection fait saillie sous le niveau de la batterie pour la protéger des chocs provenant du dessous du véhicule.

L'invention a pour objectif de répondre à au moins un des problèmes ou inconvénients rencontrés dans l'art antérieur. En particulier, l'invention a pour objectif d'améliorer la protection d'un organe sous la structure de soubassement d'un véhicule automobile, et notamment d'améliorer la protection contre des chocs verticaux. L'invention a également pour objectif d'optimiser l'aérodynamisme et la protection d'un organe sous la structure de soubassement d'un véhicule automobile.

A cet effet et selon un premier aspect, l'invention a pour objet un véhicule automobile comprenant une structure de soubassement, et au moins un organe s'étendant sous la structure de soubassement ; le véhicule comprend en outre un déflecteur s'étendant sous la structure de soubassement; dans lequel le déflecteur comprend une paroi inférieure agencée en dessous de l'organe ; le véhicule comprend en outre une butée de protection dudit organe, fixée à la structure de soubassement ; le véhicule est remarquable en ce que la butée de protection comprend une extrémité inférieure agencée verticalement entre l'organe et la paroi inférieure du déflecteur.

Comme on l'aura compris à la lecture de la définition qui vient d'en être donnée, l'invention propose un véhicule comprenant une butée de protection agencée au-dessus du déflecteur. Lors d'un choc vertical, comme par exemple lors d'un choc pendant une descente de trottoir, le déflecteur peut se déformer mais la butée de protection assure la protection de l'organe. Cette solution peut être utilisée pour protéger un bac de batterie par exemple. La butée de protection n'est pas une contrainte pour le comportement aérodynamique du véhicule car elle est recouverte au moins partiellement par le déflecteur. Par ce biais, l'invention optimise l'aérodynamisme et la protection apportée à l'organe.

Dans des modes de réalisation, le déflecteur comprend au moins deux parois latérales s'étendant suivant la direction longitudinale du véhicule, liant la paroi inférieure et la structure de soubassement ; dans lequel la butée de protection est agencée entre les parois latérales dans la direction transversale du véhicule.

De préférence, le déflecteur recouvre la butée de protection, de manière à assurer des propriétés aérodynamiques optimal en dessous du véhicule.

Dans des modes de réalisation, la butée de protection comprend une paroi de transfert d'effort et au moins une patte de fixation fixée à la structure de soubassement, la paroi de transfert d'effort comprend une extrémité libre formant l'extrémité inférieure de la butée de protection.

De préférence, la paroi de transfert d'effort est verticale et la ou au moins une des pattes de fixation est horizontale.

Lors d'un choc vertical, les efforts sont alors transmis à la structure de soubassement par la butée de protection de manière à épargner l'organe.

De préférence, la paroi de transfert d'effort comprend des moyens de rigidification choisis parmi une ou plusieurs ondulations, nervures, ou rebord, ou une combinaison de ceux-ci.

Préférentiellement, l'extrémité libre de la paroi de transfert d'effort comprend un repli horizontal formant une surface de butée verticale. Le repli augmente la surface de contact de l'extrémité libre de la butée de protection lors d'un choc vertical. Cela limite les risques de casse de la butée de protection. En complément, il rigidifie et renforce l'extrémité inférieure. Cela améliore la capacité de cette dernière à subir plusieurs chocs.

Dans des modes de réalisation, le repli horizontal s'étend transversalement depuis la paroi de transfert d'effort en direction de l'organe. De préférence, le repli est agencé verticalement en dessous de l'organe pour ne pas former un bord coupant gênant un technicien effectuant des manipulation en dessous du soubassement.

Préférentiellement, la surface de butée du repli s'étend dans la direction longitudinale du véhicule sur une distance de 100 mm à 350 mm ; de préférence une distance de 150 mm à 250 mm. La surface de butée peut, par exemple, être avantageusement limitée à des zones de chocs identifiées pour un scénario de descente de trottoir.

De préférence, la butée de protection est agencée en contact avec la paroi inférieure du déflecteur. Ainsi, lors d'un choc vertical, la paroi inférieure du déflecteur ne se déforme pas limitant son risque de casse. La butée de protection a alors un double rôle de protection de l'organe et du déflecteur.

Dans des modes de réalisation, le véhicule comprend une roue arrière, le véhicule est remarquable en ce que la butée de protection s'étend selon la direction longitudinale du véhicule, vers la roue arrière. Les chocs verticaux dans un contexte de descente de trottoir d'un véhicule en marche arrière ont plus souvent lieu juste à l'avant des roues arrière. Cette configuration permet de limiter ces risques.

De préférence, la butée de protection est une pièce métallique d'une épaisseur d'au moins 1,5 mm ; de préférence entre 1,5 mm et 3 mm.

Dans des modes de réalisation, la structure de soubassement comprend un longeron auquel la butée de protection est fixée.

Dans des modes de réalisation, l'organe est un bac de batterie de propulsion du véhicule.

L'invention sera bien comprise et d'autres aspects et avantages apparaîtront clairement à la lecture de la description qui suit, donnée à titre d'exemple en référence aux planches de dessins annexées sur lesquelles :
[Fig. 1] la figure 1 est une vue d'en dessous d'une structure de soubassement isolée d'un véhicule automobile selon un mode de réalisation de l'invention ;
[Fig. 2] la figure 2 est une vue en perspective d'un détail d'une structure de soubassement isolée selon un mode de réalisation de l'invention ;
[Fig. 3] la figure 3 est une vue en perspective d'en dessous d'un détail montrant une pièce de protection dans une structure de soubassement selon un mode de réalisation de l'invention ;
[Fig. 4] la figure 4 est une vue en perspective d'en dessous d'un détail montrant une pièce de protection dans une structure de soubassement sans déflecteur selon un mode de réalisation de l'invention.

Dans la suite de la description, le terme « comprendre » est synonyme de « inclure » et n'est pas limitatif en ce qu'il autorise la présence d'autres éléments dans le véhicule auquel il fait référence. Il est entendu que le terme « comprendre » inclut les termes « consister en ».

De même, les termes « inférieur », « supérieur », « haut » et « bas » s'entendront selon leur définition usuelle, dans laquelle les termes « inférieur » et « bas » indiquent une proximité avec le sol plus importante selon la direction verticale que respectivement les termes « supérieur » et « haut ».

Dans la présente description, le terme « longitudinal », le terme « longitudinalement », le terme « transversal », et le terme « transversalement » sont employés selon le référentiel du véhicule, dans la configuration de montage. Le terme « longitudinal » correspond à la direction principale de déplacement du véhicule. Le terme « transversal » correspond à une direction perpendiculaire à la direction principale de déplacement du véhicule. Le terme « avant » est en référence au sens principal de déplacement du véhicule. Le terme « arrière » désigne l'opposé de l'avant du véhicule.

Dans la présente description le terme « perpendiculaire » ne doit pas être entendu au sens strict du terme. Perpendiculaire signifie une inclinaison à 90° +/-10° ; préférentiellement +/- 5° ; plus préférentiellement +/- 2°. De même, le terme « horizontal » ne doit pas être entendu au sens strict du terme. Une tolérance de 10°, préférentiellement 5°, est appliquée dans le contexte de l'invention. Le terme « parallèle » ne doit pas être entendu au sens strict du terme. La notion de parallélisme couvre des inclinaisons inférieures ou égales à 10° ; préférentiellement à 5°.

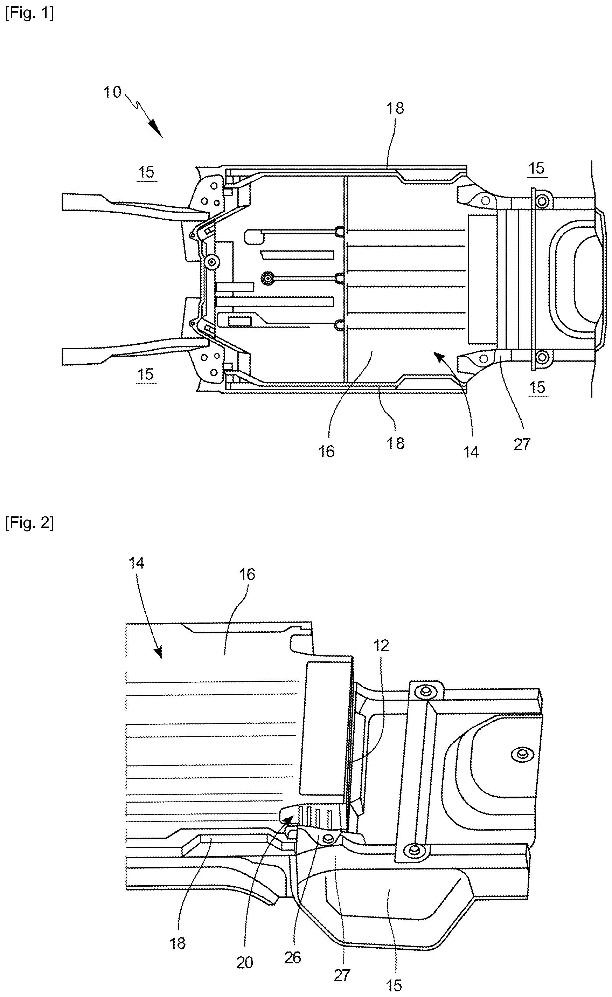

La figure 1 montre une vue partielle de dessous d'un véhicule automobile comprenant une structure de soubassement 10. Au moins un organe s'étend sous la structure de soubassement 10.

L'organe peut être par exemple un bac de batterie 12 de propulsion, comme montré aux figures 2 à 4, dans le cas d'un véhicule électrique ou hybride électrique. L'organe peut aussi être une conduite de câbles électrique, ou d'air ou tout autre organe du véhicule automobile.

Au moins un déflecteur 14 s'étend sous la structure de soubassement 10. Le véhicule peut comprendre plusieurs déflecteurs permettant d'assurer l'aérodynamisme dans sa partie inférieure, notamment entre le véhicule et la route, ou la surface de roulage.

Le déflecteur 14 peut être agencé dans la partie arrière du véhicule, à l'avant d'un espace de passage de roue 15 dans lequel est montée une roue, non montrée. Le déflecteur 14 peut aussi être agencé à l'avant du véhicule ou dans une partie centrale de ce dernier.

Le déflecteur 14 comprend une paroi inférieure 16 agencée en dessous de l'organe. La paroi inférieure 16 est une paroi, assurant le profil aérodynamique entre le véhicule automobile et la route.

Le déflecteur 14 peut comprendre au moins deux parois latérales 18 agencées dans la direction longitudinale du véhicule, liant la paroi inférieure 16 et la structure de soubassement 10. Le déflecteur 14 forme alors un bac agencé sous le véhicule automobile et recouvrant l'organe.

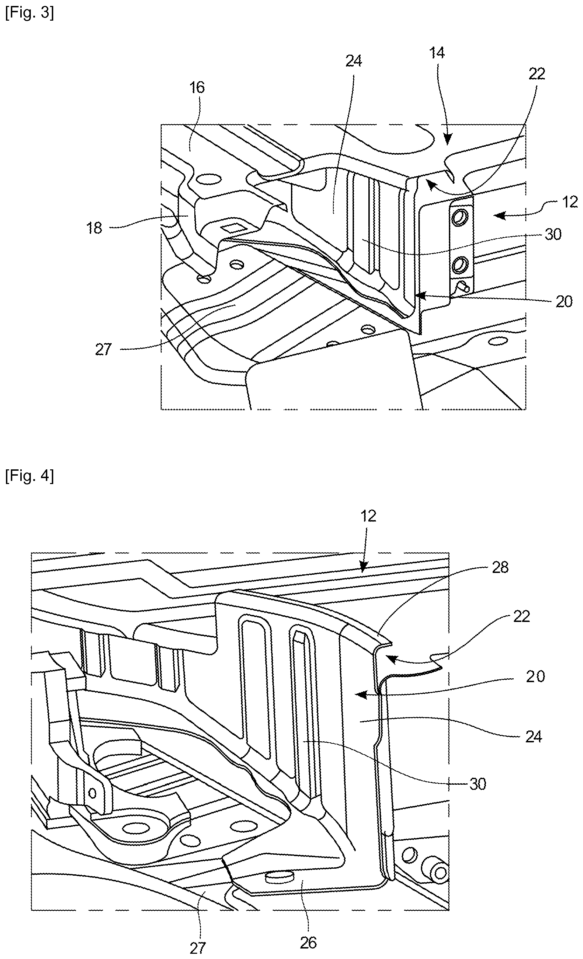

Le véhicule automobile comprend en outre une butée de protection 20 dudit organe, montrée aux figures 2 à 4, fixée à la structure de soubassement 12. La butée de protection 20 comprend une extrémité inférieure 22, visible aux figures 3 et 4, agencée verticalement entre l'organe et la paroi inférieure 16 du déflecteur.

Le véhicule automobile peut comprendre plusieurs butées de protection, avec par exemple deux butées de fixation agencées de part et d'autre de l'organe dans la direction transversale du véhicule.

La butée de protection 20 peut être agencée entre les parois latérales 18 dans la direction transversale du véhicule. Avantageusement, le déflecteur 14, par exemple sa paroi inférieure 16, peut recouvrir entièrement la butée de protection 20.

La butée de protection 20 forme une butée contre les chocs dans la direction verticale, comme par exemple les chocs lors d'une descente de marche ou de trottoir du véhicule automobile.

La butée de protection 20 peut être agencée à l'avant ou à l'arrière du véhicule. De préférence, la butée de protection 20 est au moins partiellement alignée avec l'organe dans la direction transversale du véhicule. En d'autres termes, la butée de protection 20 recouvre longitudinalement, au moins une partie de l'organe.

La butée de protection 20 est une pièce sensiblement allongée qui peut être agencée dans la direction longitudinale du véhicule. Dans le cas d'un choc avec un trottoir, la butée de protection protège tous les organes qui sont partiellement alignés transversalement avec elle, et/ou les organes qu'elle chevauche longitudinalement.

Par exemple, le véhicule comprenant une roue arrière agencée dans un passage de roue 15, la butée de protection 20 peut s'étendre selon la direction longitudinale du véhicule, vers la roue arrière, et donc vers le passage de roue 15.

L'extrémité inférieure 22 de la butée de protection 20 peut s'étendre dans la direction longitudinale du véhicule sur toute la longueur du véhicule ; de préférence sur une distance de 100 mm à 350 mm ; de préférence une distance de 150 mm à 250 mm. Par exemple, l'extrémité inférieure 22 de la butée de protection 20 est agencée au niveau d'une roue arrière du véhicule.

La butée de protection peut être formée dans n'importe quel matériau suffisamment rigide pour protéger l'organe. La butée de protection peut être une pièce métallique, par exemple en acier, d'une épaisseur d'au moins 1,5 mm ; de préférence entre 1,5 mm et 3 mm. Alternativement, la butée de protection est en aluminium.

La butée de protection 20 peut comprendre une paroi de transfert d'effort 24. Lors d'un choc vertical, la paroi de transfert d'effort 24 transfert les efforts vers la structure de soubassement 10, permettant ainsi de limiter les efforts reçus par l'organe, par exemple par le bac de batterie 12. La paroi de transfert d'effort 24 est de préférence une paroi verticale.

La butée de protection 20 peut comprendre une patte de fixation 26, montrée à la figure 4, fixée à la structure de soubassement 10. La paroi de transfert d'effort 24 peut comprendre une extrémité libre formant l'extrémité inférieure 22 de la butée de protection 20 et une autre extrémité liée à la patte de fixation 26.

La butée de protection 20 peut comprendre une pluralité de pattes de fixation 26 agencées sur un ou plusieurs éléments de la structure de soubassement en fonction de l'espace disponible. Par exemple, la structure de soubassement comprend un longeron auquel la butée de protection est fixée. Le longeron peut être par exemple un longeron central ou un longeron arrière 27, comme montré aux figures 1 à 4.

La patte de fixation 26 peut être fixée à la structure de soubassement par tout moyen approprié, comme par exemple par serrage au moyen d'un système vis écrou, par soudage, ou par encastrement.

La butée de protection 20 peut comprendre une équerre avec une paroi de transfert d'effort 24 verticale et une patte de fixation 26 horizontale, comme montré à la figure 4.

L'extrémité libre de la paroi peut être renforcée pour mieux résister à choc. Par exemple, l'extrémité libre peut comprendre une forme évasée ou ondulée. Comme montré à la figure 4, l'extrémité libre de la paroi de transfert d'effort peut comprendre un repli 28 horizontal formant une surface de butée verticale. Le repli 28 est également appelé rebord, il est incliné par rapport à la paroi de transfert d'effort 24. Il constitue un raidisseur de l'extrémité inférieure 22.

Le repli horizontal 28 forme une surface d'appui pour un obstacle ou objet contre la butée de protection 20 lors d'un choc vertical. Le repli horizontal peut s'étendre jusqu'à un bord extérieur de la structure de soubassement 10, mais il reste de préférence d'une dimension comprise entre 10 mm et 50 mm.

Le repli horizontal 28 peut être formé dans une direction quelconque. De préférence, le repli horizontal 28 peut s'étendre transversalement depuis la paroi de transfert d'effort vers l'organe pour limiter de gêner, voire de blesser un opérateur réalisant une manipulation sous la structure de soubassement.

Le repli horizontal 28 est agencé verticalement entre l'organe et la paroi inférieure. Le repli horizontal 28 de l'extrémité inférieure 22 de la butée de protection peut être agencée en contact avec l'organe, par exemple avec le bac de batterie 12. Le repli horizontal 28 de l'extrémité inférieure 22 de la butée de protection peut aussi être agencée à l'écart de l'organe sous le déflecteur. Par exemple le repli horizontal 28 peut être agencé en contact avec la paroi inférieure 16 du déflecteur 14. D'une manière générale, l'extrémité inférieure 22 de la butée de protection peut être agencé en contact avec la paroi inférieure 16 du déflecteur 14. L'extrémité inférieure 22 peut épouser la paroi inférieure 16 afin d'améliorer la transmission d'efforts sans fragiliser cette dernière.

De manière à renforcer la butée de protection 20, cette dernière peut aussi comprendre des moyens de rigidification 30 comme par exemple : une ou plusieurs ondulations, nervures, ou rebord, ou une combinaison de ceux-ci

L'homme du métier comprendra que toutes les caractéristiques présentées pour un véhicule comprenant une butée de protection peuvent être adaptée pour un véhicule comprenant une pluralité de butées de protection.

## Revendications

1. Véhicule automobile comprenant une structure de soubassement (10), et au moins un organe s'étendant sous la structure de soubassement ; le véhicule comprend en outre un déflecteur (14) s'étendant sous la structure de soubassement; dans lequel le déflecteur comprend une paroi inférieure (16) agencée en dessous de l'organe ; le véhicule comprend en outre une butée de protection (20) dudit organe, fixée à la structure de soubassement ; le véhicule est **caractérisé en ce que** la butée de protection comprend une extrémité inférieure (22) agencée verticalement entre l'organe et la paroi inférieure (16) du déflecteur.

2. Véhicule automobile selon la revendication 1, **caractérisé en ce que** le déflecteur (14) comprend au moins deux parois latérales (18) s'étendant suivant la direction longitudinale du véhicule, liant la paroi inférieure (16) et la structure de soubassement (10) ; dans lequel la butée de protection (20) est agencée entre les parois latérales (18) dans la direction transversale du véhicule ; de préférence, le déflecteur (14) recouvre la butée de protection (20).

3. Véhicule automobile selon l'une quelconque des revendications 1 ou 2, **caractérisé en ce que** la butée de protection (20) comprend une paroi de transfert d'effort (24) et au moins une patte de fixation (26) fixée à la structure de soubassement, la paroi de transfert d'effort (24) comprend une extrémité libre formant l'extrémité inférieure (22) de la butée de protection ; de préférence, la paroi de transfert d'effort (24) est verticale et la ou au moins une des pattes de fixation (26) est horizontale.

4. Véhicule automobile selon la revendication 3, **caractérisé en ce que** l'extrémité libre de la paroi de transfert d'effort (24) comprend un repli (28) horizontal formant une surface de butée verticale.

5. Véhicule automobile selon la revendication 4, **caractérisé en ce que** le repli (28) horizontal s'étend transversalement depuis la paroi de transfert d'effort (24) en direction de l'organe ; de préférence, le repli (28) est agencé verticalement en dessous de l'organe.

6. Véhicule automobile selon l'une quelconque des revendications 4 ou 5, **caractérisé en ce que** la surface de butée du repli (28) s'étend dans la direction longitudinale du véhicule sur une distance de 100 mm à 350 mm ; de préférence une distance de 150 mm à 250 mm.

7. Véhicule automobile selon l'une quelconque des revendications 1 à 6, **caractérisé en ce que** la butée de protection (20) est agencée en contact avec la paroi inférieure (16) du déflecteur.

8. Véhicule automobile selon l'une quelconque des revendications 1 à 7, le véhicule comprenant une roue arrière, le véhicule est **caractérisé en ce que** la butée de protection (20) s'étend selon la direction longitudinale du véhicule, vers la roue arrière.

9. Véhicule automobile selon l'une quelconque des revendications 1 à 8, **caractérisé en ce que** la butée de protection (20) est une pièce métallique d'une épaisseur d'au moins 1,5 mm ; de préférence entre 1,5 mm et 3 mm.

10. Véhicule automobile selon l'une quelconque des revendications 1 à 9, **caractérisé en ce que** la structure de soubassement (10) comprend un longeron (27) auquel la butée de protection est fixée ; et l'organe est un bac de batterie (12) de propulsion du véhicule.

## Patentansprüche

1. Kraftfahrzeug mit einer Unterkonstruktion (10) und mindestens einem Element, das sich unter der Unterkonstruktion erstreckt; wobei das Fahrzeug ferner eine Ablenkeinrichtung (14) aufweist, die sich unter der Unterkonstruktion erstreckt; wobei die Ablenkeinrichtung eine untere Wand (16) aufweist, die unterhalb des Elements angeordnet ist; wobei das Fahrzeug ferner einen Schutzanschlag (20) des Elements aufweist, der an der Unterkonstruktion befestigt ist; wobei das Fahrzeug **dadurch gekennzeichnet ist, dass** der Schutzanschlag ein unteres Ende (22) aufweist, das vertikal zwischen dem Element und der unteren Wand angeordnet ist (16) des Deflektors.

2. Kraftfahrzeug nach Anspruch 1, **dadurch gekennzeichnet, dass** die Ablenkeinrichtung (14) mindestens zwei sich in Fahrzeuglängsrichtung erstreckende Seitenwände (18) aufweist, die die Bodenwand (16) und die Unterkonstruktion (10) verbinden; wobei der Schutzanschlag (20) zwischen den Seitenwänden (18) in Fahrzeuglängsrichtung angeordnet ist; wobei vorzugsweise die Ablenkeinrichtung (14) den Schutzanschlag (20) abdeckt.

3. Kraftfahrzeug nach einem der Ansprüche 1 oder 2, **dadurch gekennzeichnet, dass** der Schutzanschlag (20) eine Kraftübertragungswand (24) und mindestens eine an der Unterkonstruktion befestigte Befestigungslasche (26) aufweist, die Kraftübertragungswand (24) ein freies Ende aufweist, das das untere Ende (22) des Schutzanschlags bildet; vorzugsweise ist die Kraftübertragungswand (24) vertikal und die oder mindestens eine der Befestigungslaschen (26) horizontal.

4. Kraftfahrzeug nach Anspruch 3, **dadurch gekennzeichnet, dass** das freie Ende der Kraftübertragungswand (24) eine horizontale Abkantung (28) aufweist, die eine vertikale Anschlagfläche bildet.

5. Kraftfahrzeug nach Anspruch 4, **dadurch gekennzeichnet, dass** die horizontale Faltung (28) sich quer von der Kraftübertragungswand (24) in Richtung auf das Organ erstreckt; vorzugsweise ist die Faltung (28) vertikal unterhalb des Organs angeordnet.

6. Kraftfahrzeug nach einem der Ansprüche 4 oder 5, **dadurch gekennzeichnet, dass** sich die Anschlagfläche des Falzes (28) in Fahrzeuglängsrichtung über einen Abstand von 100 mm bis 350 mm, vorzugsweise über einen Abstand von 150 mm bis 250 mm erstreckt.

7. Kraftfahrzeug nach einem der Ansprüche 1 bis 6, **dadurch gekennzeichnet, dass** der Schutzanschlag (20) in Kontakt mit der unteren Wand (16) der Ablenkplatte angeordnet ist.

8. Kraftfahrzeug nach einem der Ansprüche 1 bis 7, wobei das Fahrzeug ein Hinterrad umfasst, wobei das Fahrzeug **dadurch gekennzeichnet ist, dass** sich der Schutzanschlag (20) in Längsrichtung des Fahrzeugs zum Hinterrad hin erstreckt.

9. Kraftfahrzeug nach einem der Ansprüche 1 bis 8, **dadurch gekennzeichnet, dass** der Schutzanschlag (20) ein Metallteil mit einer Dicke von mindestens 1,5 mm, vorzugsweise zwischen 1,5 mm und 3 mm ist.

10. Kraftfahrzeug nach einem der Ansprüche 1 bis 9, **dadurch gekennzeichnet, dass** die Unterkonstruktion (10) einen Längsträger (27) umfasst, an dem der Schutzanschlag befestigt ist; und das Organ eine Antriebsbatterie (12) des Fahrzeugs ist.

## Claims

1. Motor vehicle comprising a substructure (10), and at least one member extending under the substructure; the vehicle further comprises a deflector (14) extending under the substructure; wherein the deflector comprises a lower wall (16) arranged below the member; the vehicle further comprises a protective stop (20) of said member, fixed to the substructure; the vehicle is **characterised in that** the protective stop comprises a lower end (22) arranged vertically between the member and the lower wall (16) of the deflector.

2. Motor vehicle according to Claim 1, wherein the deflector (14) comprises at least two side walls (18) extending along the longitudinal management of the vehicle, connecting the lower wall (16) and the underbody structure (10); wherein the protective stop (20) is arranged between the side walls (18) in the transverse management of the vehicle; preferably, the deflector (14) covers the protective stop (20).

3. Motor vehicle according to any one of Claims 1 or 2, wherein the protective stop (20) comprises a force transfer wall (24) and at least one fixing lug (26) fixed to the underbody structure, the force transfer wall (24) comprises a loose end forming the lower end (22) of the protective stop; preferably, the force transfer wall (24) is vertical and the or at least one of the fixing lugs (26) is horizontal.

4. Motor vehicle according to Claim 3, **characterised in that** the free end of the force transfer wall (24) comprises a horizontal fold (28) forming a vertical abutment surface.

5. Motor vehicle according to claim 4, wherein the horizontal fold (28) extends transversely from the force transfer wall (24) at the management of the member; preferably, the fold (28) is arranged vertically below the member.

6. Motor vehicle according to any one of Claims 4 or 5, wherein the abutment surface of the fold (28) extends in the longitudinal management of the vehicle over a distance of 100 mm to 350 mm; preferably a distance of 150 mm to 250 mm.

7. Motor vehicle according to any one of Claims 1 to 6, **characterised in that** the protective stop (20) is arranged in contact with the lower wall (16) of the deflector.

8. Motor vehicle according to any one of Claims 1 to 7, the rear comprising a rear wheel, wherein the protective stop (20) extends along the longitudinal management of the vehicle, towards the vehicle wheel.

9. Motor vehicle according to any one of Claims 1 to 8, **characterised in that** the protective stop (20) is a metal component with a thickness of at least 1.5 mm; preferably between 1.5 mm and 3 mm.

10. Motor vehicle according to any one of Claims 1 to 9, wherein the underframe (10) comprises a spar (27) to which the protective stop is fixed; and the member is a battery tray (12) for propulsion of the vehicle.
